# EUROPEAN PATENT SPECIFICATION

(11) **EP 2 538 602 B1**
(45) Date of publication and mention of the grant of the patent: **26.07.2017**
(21) Application number: 11761934.6
(22) Date of filing: 15.02.2011
(51) Int. Cl.: H04L 12/701, H04L 12/707, H04L 12/913

(54) **METHOD AND SYSTEM FOR REALIZING HOT STANDBY IN CENTRALIZED NETWORK NODES**
VERFAHREN UND SYSTEM ZUR DURCHFÜHRUNG DES EINSATZBEREITEN WARTEBETRIEBS IN ZENTRALISIERTEN NETZWERKKNOTEN
PROCÉDÉ ET SYSTÈME DE RÉALISATION DE REPRISE IMMÉDIATE DANS DES NOEUDS DE RÉSEAU CENTRALISÉ

(30) Priority: 30.03.2010 CN 201010142115
(43) Date of publication of application: 26.12.2012
(73) Proprietor: ZTE Corporation, Shenzhen, Guangdong 518057 (CN)
(72) Inventor: ZHANG, Mingzhi, Shenzhen Guangdong 518057 (CN); HU, Zhifeng, Shenzhen Guangdong 518057 (CN); HE, Qiang, Shenzhen Guangdong 518057 (CN)
(74) Representative: J A Kemp
(86) International application number: PCT/CN2011/071004
(87) International publication number: WO 2011/120360

(56) References cited:
- CN-A- 101 155 124
- CN-A- 101 237 409
- CN-A- 101 340 369
- CN-A- 101 826 954

## Description

### TECHNICAL FIELD

The disclosure relates to hot backup technology based on a Resource Reservation Protocol-Traffic Engineering (RSVP-TE) service, in particular to a method and system for realizing hot backup in a centralized network node.

### BACKGROUND

The RSVP-TE, as a supplementary protocol of the Resource Reservation Protocol (RSVP), is used for establishing a Label Switched Path (LSP) for a Multi-Protocol Label Switching (MPLS) protocol network, and is mainly used in an example that supports specific LSP transmission no matter resources are reserved or not reserved.

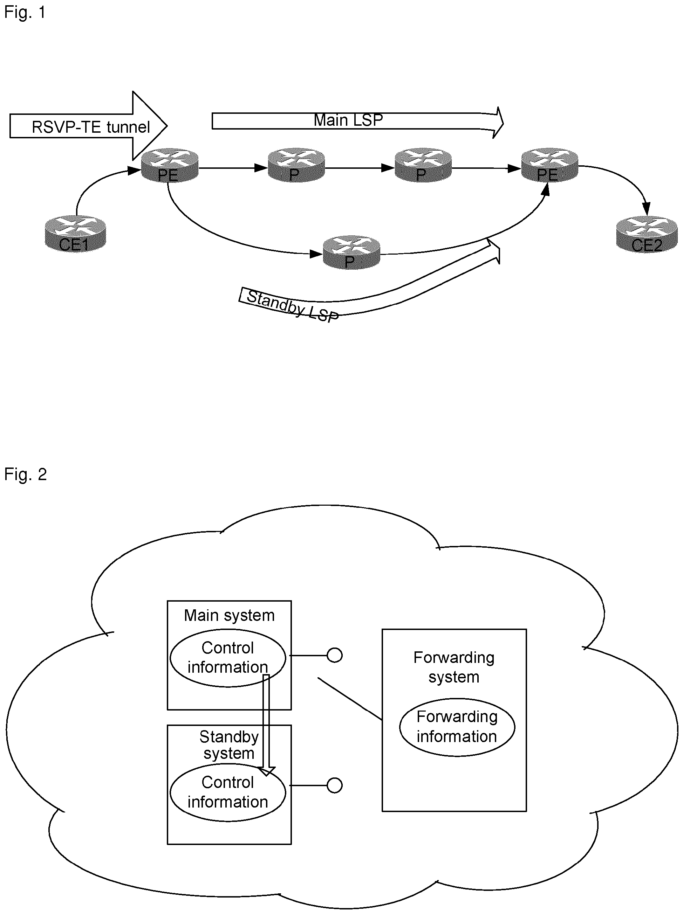

The TE HOTSTANDBY is an end-to-end protection mechanism for an RSVP-TE tunnel. Two LSPs are formed for each RSVP-TE tunnel: a main LSP and a standby LSP respectively. When the main LSP fails, traffic will be switched to the standby LSP within 50ms. Then, when the main LSP is restored, the traffic will be switched back to the main LSP. Fig. 1 is a diagram showing the networking structure of a typical RSVP-TE HOTSTANDBY network, as shown in Fig.1, the forwarding network consists of seven routers, two thereof respectively serving as two Custom Edges (CEs) of a private network, i.e., CE1 and CE2 in Fig. 1, another two thereof serving as Provider Edges (PEs), i.e., PE1 and PE2 in Fig. 1, which are centralized devices, and further two thereof serving as Provider Routers (P routers) of the main LSP, and the rest one serving as the P router of the standby LSP; wherein the CEs are edge devices directly connected with a service provider; the PEs are edge devices in a backbone network and are directly connected with the CEs of a user; and the P routers are devices not connected with the CEs directly in the backbone network. When the end-to-end protection mechanism for TE HOTSTANDBY is enabled, two LSPs are established by a RSVP-TE signaling. When a section of the main LSP fails, all the RSVP-TE service traffic is switched to the standby LSP.

The hot backup technology is explained briefly below. The hot backup technology is a protection backup mechanism developed for improving the reliability of a forwarding network. Fig. 2 is a diagram showing the principle of the hot backup, as shown in Fig.2, the whole system includes two control modules: a main control module (corresponding to the main system in Fig. 2) and a standby control module (corresponding to the standby system in Fig. 2) respectively, wherein the main control module copies acquired control information to the standby control module in real time; and when the main control module fails, switching is performed between the main and standby control modules, and the original standby control module replaces the main control module to work. Here, the control information refers to the data stored in the memory of the network node and used for recording the information of the RSVP-TE tunnel and LSP. The forwarding information refers to the specific data stored in a chip register of the network node and used for guiding a forwarding chip of the network node to forward data.

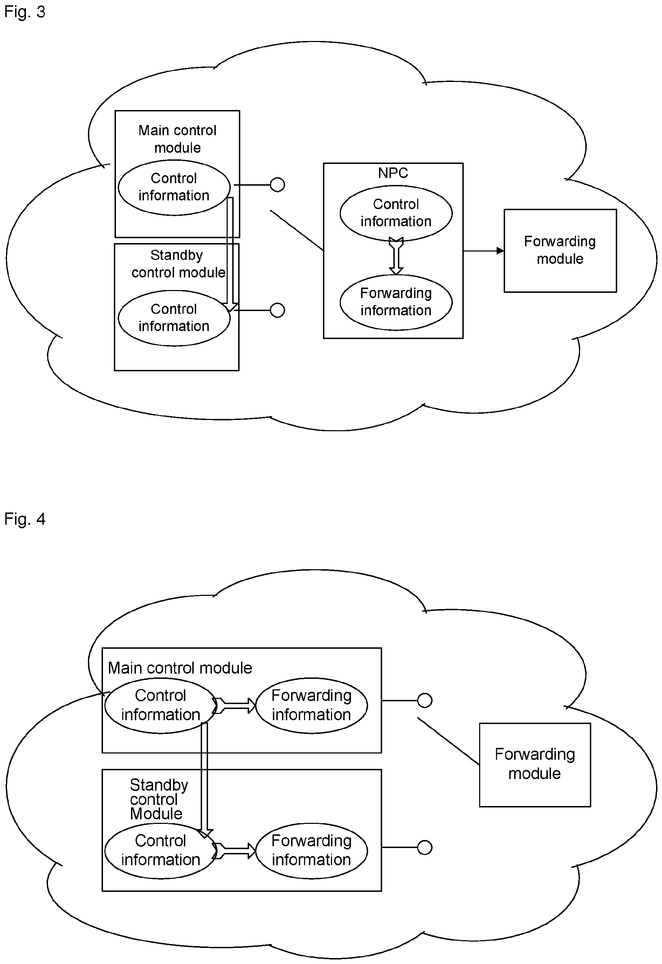

At present, there are two kinds of network nodes: distributed and centralized network nodes. Fig. 3 is a diagram showing the structure of a distributed network node, as shown in Fig.3, in the distributed network node, control information is stored in the main and standby control modules, while forwarding information is stored in a Network Processor Card (NPC), thus the control information and the forwarding information are separated. Moreover, it is very easy to realize hot backup in the distributed network node. The main control module synchronizes the control information, i.e., route, stored in itself, to the standby control module and the NPC; and the NPC generates forwarding information according to the synchronized control information.

In the current forwarding network node, the centralized network node has a greater proportion in the communication market due to its low cost. Fig. 4 is a diagram showing the structure of a centralized network node, as shown in Fig.4, the centralized network node realizes the functions of a Management Processor Unit (MPU), a Routing Processor Unit (RPU) and the NPC in a same Central Processing Unit (CPU), so as to have a lower cost and less total software complexity than the distributed device. Whereas, for the hot backup, control and forwarding cannot be separated as only a single CPU works.

However, since the control information and the forwarding information are centralized in a same CPU, there is still no related technical solution for realizing hot backup in a current centralized network node now.

CN 101340369A discusses a method and router for implementing support for graceful restart by virtual connection.

CN 101237409A discusses a method and device for fast re-routing in MPLS VPN.

### SUMMARY

In view of this, the main objective of the disclosure is to provide a method and system for realizing hot backup in a centralized network node, in order to realize the hot backup of forwarding information in the centralized network node.

To achieve the objective, the technical solution of the disclosure is implemented as follows.

A method for realizing hot backup in a centralized network node, in which a main control module and a standby control module are arranged and an RSVP-TE tunnel, which contains two LSPs: a main LSP and a standby LSP, is established for services, includes:
acquiring, by the main control module, control information of the main LSP and that of the standby LSP, setting identification information of the control information of the main LSP and that of the standby LSP as Active or Inactive according to current statuses of the main and standby LSPs, and synchronizing the control information of the main LSP and that of the standby LSP to the standby control module; and
after switching is performed between the main and standby control modules, generating, by a current main control module, forwarding information according to control information of an LSP whose identification information is Active, and forwarding, by the current main control module, a service.

Preferably, the acquiring, by the main control module, control information of the main LSP and that of the standby LSP may include:
interacting, by the current main control module, information with other network nodes in the TE tunnel by sending and receiving an RSVP-TE signalling, and acquiring, by the current main control module, the control information of the main LSP and that of the standby LSP, when the RSVP-TE tunnel is established; or
acquiring, by the current main control module, the control information of the main LSP and that of the standby LSP by sending an LSP route detection data packet, when the main or standby LSP in the RSVP-TE tunnel is updated; or
acquiring, by the current main control module, the control information of the main LSP and that of the standby LSP through configuration information of the main and standby LSPs.

Preferably, the control information may include identification information of the RSVP-TE tunnel, identification information of an LSP contained in the RSVP-TE tunnel, identification information of a network node contained in the LSP, and information of a forwarding port; and
the forwarding information may be routing forwarding information generated according to the control information.

Preferably, the setting identification information of the control information of the main LSP and that of the standby LSP as Active or Inactive according to current statuses of the main and standby LSPs may include:
setting the identification information of the control information of the main LSP as Active and the identification information of the control information of the standby LSP as Inactive when both of the main and standby LSPs are available;
setting the identification information of the control information of both the main and standby LSPs as Inactive when neither of the main and standby LSPs is available; and
setting the identification information of the control information of a current available LSP as Active, and that of a current unavailable LSP as Inactive, when one of the main and standby LSPs is available.

Preferably, the method may further include:
storing, by the network node, information of a corresponding relationship between the control information of the LSP whose identification information is Active and identifiers of the available LSP and its RSVP-TE tunnel; and
searching for, by the current main control module, the control information of the LSP whose identification information is Active according to the identifier of the available LSP or that of the RSVP-TE tunnel and the corresponding relationship.

A system for realizing hot backup in a centralized network node, includes a network node, in which a main control module and a standby control module are arranged and an RSVP-TE tunnel, which contains two LSPs: a main LSP and a standby LSP, is established for services; wherein the main control module further includes:
an acquisition sub-module, which is configured to acquire control information of the main LSP and that of the standby LSP;
a setting sub-module, which is configured to set identification information of the control information of the main LSP and that of the standby LSP as Active or Inactive according to current statuses of the main and standby LSPs;
a synchronizing sub-module, which is configured to synchronize the control information of the main LSP and the control information of the standby LSP to the standby control module;
a generating sub-module, which is configured to generate forwarding information according to control information of an LSP whose identification information is Active after switching is performed between the main and standby control modules; and
a service forwarding sub-module, which is configured to forward a service according to the forwarding information.

Preferably, the acquisition sub-module may further interact information with other network nodes in the TE tunnel by sending and receiving an RSVP-TE signaling and acquire the control information of the main LSP and that of the standby LSP when the RSVP-TE tunnel is established; or
the acquisition sub-module may further acquire the control information of the main LSP and that of the standby LSP by sending an LSP detection data packet when the main or standby LSP in the RSVP-TE tunnel is updated; or
the acquisition sub-module may further acquire the control information of the main LSP and that of the standby LSP through configuration information of the main and standby LSPs.

Preferably, the control information may include identification information of the RSVP-TE tunnel, identification information of an LSP contained in the RSVP-TE tunnel, identification information of a network node contained in the LSP, and information of a forwarding port; and
the forwarding information may be routing forwarding information generated according to the control information.

Preferably, the setting sub-module may further set the identification information of the control information of the main LSP as Active and the identification information of the control information of the standby LSP as Inactive, when both of the main and standby LSPs are available;
the setting sub-module may further set the identification information of the control information of both the main and standby LSPs as Inactive, when neither of the main and standby LSPs is available; and
the setting sub-module may further set the identification information of the control information of a current available LSP as Active, and that of a current unavailable LSP as Inactive, when one of the main and standby LSPs is available.

Preferably, the network node may further include:
a storing module, which is configured to store information of a corresponding relationship between the control information of the LSP whose identification information is Active and identifiers of the available LSP and its RSVP-TE tunnel; and
a searching module, which is configured to search for the control information of the LSP whose identification information is Active according to the identifier of the available LSP or that of the RSVP-TE tunnel and the corresponding relationship.

In the disclosure, identification information, which corresponds to status information of a current LSP, is set for control information. Thus, during the switching between the main and standby control modules in a network node, a service can be forwarded timely by an LSP used before the switching, so that the switching time is reduced, and the timely forwarding of a data packet can be ensured, thereby the data forwarding quality of a forwarding network is improved.

### BRIEF DESCRIPTION OF THE DRAWINGS

Fig. 1 is a diagram showing the networking structure of a typical RSVP-TE HOTSTANDBY network;
Fig. 2 is a diagram showing the principle of hot backup;
Fig. 3 is a diagram showing the structure of a distributed network node;
Fig. 4 is a diagram showing the structure of a centralized network node;
Fig. 5 is a diagram showing the structure of a query table for control information of an LSP; and
Fig. 6 is a diagram showing the composition structure of a system for realizing hot backup in a centralized network node of the disclosure.

### DETAILED DESCRIPTION

The basic idea of the disclosure is as follows: identification information, which corresponds to status information of a current LSP, is set for control information. Thus, during the switching between the main and standby control modules in a network node, a service can be forwarded timely by an LSP used before the switching.

To make the objective, technical solution and advantages of the disclosure clearer, the disclosure is further described below in detail with reference to the embodiments and drawings.

Based on the network structure shown in Fig. 1, the solution for realizing hot backup in the disclosure is further explained.

At first, an RSVP-TE tunnel is established from PE1 to PE2, while the RSVP-TE tunnel may generate a main LSP and a standby LSP. The main control module acquires control information of the two LSPs and sends it to the standby control module in real time; and corresponding identification information, which corresponds to a current active LSP, is set in the control information. For example, the identifier of the control information of the current active LSP is set as "1" and that of an inactive LSP is set as "0", that is, the main control module can determine the current active LSP according to the control information; and when it is determined that the LSPs have a failure or are restored, the status of each LSP may be determined in time and the control information corresponding to the LSPs is set at the same time. The standby control module generates forwarding information according to the control information received from the main control module.

The method of acquiring control information of LSPs by the main control module includes: the current main control module interacts information with other network nodes in the TE tunnel by sending and receiving an RSVP-TE signaling and acquires the control information of the main LSP and that of the standby LSP, when the RSVP-TE tunnel is established; or
the current main control module acquires the control information of the main LSP and that of the standby LSP by sending an LSP route detection data packet, when the main or standby LSP in the RSVP-TE tunnel is updated; or
the current main control module acquires the control information of the main LSP and that of the standby LSP through configuration information of the main and standby LSPs.

In the disclosure, the control information includes identification information of the RSVP-TE tunnel, identification information of an LSP contained in the RSVP-TE tunnel, identification information of a network node contained in the LSP, and information of a forwarding port; and, the forwarding information is routing forwarding information generated according to the control information.

A Virtual Private Network (VPN) service is established between CE1 and CE2 after the RSVP-TE tunnel is established. Thus, the VPN public output interface of CE1 is the RSVP-TE TUNNEL.

After the VPN service starts, data packets are sent from CE1 to CE2 continuously, during which the data packets may encapsulate an VPN label and a label of the RSVP-TE tunnel, then, the data packets are sent to CE2 through the main LSP. Here, when both LSPs in the RSVP-TE tunnel are available, the main LSP is preferred, and the standby LSP is used only when the main LSP fails.

It is assumed that switching is performed between the main and standby control modules on PE1 for some reason (such as the main control module has a failure), the standby control module becomes the main control module to guide the forwarding of data packets by using the forwarding information maintained by itself. Thus, the traffic of the data packets may encapsulate the VPN label and the label of the RSVP-TE tunnel, and then is sent to CE2 through the main LSP. The original main control module becomes the standby control module after being reset and restarted to receive the control information of the current main control module in real time.

Subsequently, it is assumed that the current LSP fails and can not be used for forwarding data packets, the current main control module sets the control information and the identifier of the control information of the standby LSP as Active, and updates the current standby control module with the control information of the current LSP. The current main control module may generate forwarding information by using the control information whose identification information is Active, thus, the traffic of the data packets may encapsulate the VPN label and the label of the RSVP-TE tunnel, and then is sent to CE2 through the standby LSP.

Subsequently, it is assumed that switching is performed again between the main and standby control modules in PE1, thus the current standby control module becomes the main control module, and the current main control module becomes the standby control module, and the current main control module guides the forwarding of data packets by using forwarding information maintained by itself. The current main control module may generate the forwarding information by using the control information whose identification information is Active, thus, the traffic of the data packets may encapsulate the VPN label and the label of the RSVP-TE tunnel, and then is sent to CE2 through the standby LSP.

Subsequently, it is assumed that the main LSP is restored, the current main control module may acquire current control information of the main LSP and update the standby control module with the current control information in real time. The main control module may generate the forwarding information according to the current control information of the main LSP, thus, the traffic of the data packets may encapsulate the VPN label and the label of the RSVP-TE tunnel, and then is sent to CE2 through the main LSP.

Therefore, by updating the standby control module with the control information of the main control module in real time, wherein identification information corresponding to a status of a current LSP is set in the control information, the current main control module generates the forwarding information according to the control information whose current identification information is Active, and forwards the traffic of the current data packets after the switching is performed between the main and standby control modules in the network node.

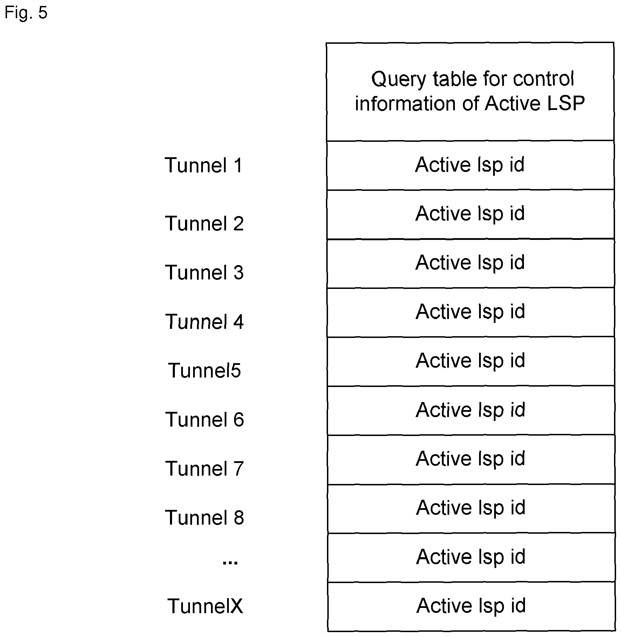

Fig. 5 is a diagram showing the structure of a query table for control information of an LSP, as shown in Fig.5, in the disclosure, in order to manage the control information in the network node more easily, the control information whose identification information is Active is stored in the form of one-dimensional array, specifically, the control information of the current active LSP corresponds to identification information of the active LSP and an identifier of the RSVP-TE tunnel, that is to say, the control information corresponding to the LSP can be found by the identifier of the LSP and the identifier of the RSVP-TE tunnel. The control information stored in such way is faster to search and more convenient to maintain than the current control information stored in the form of tree.

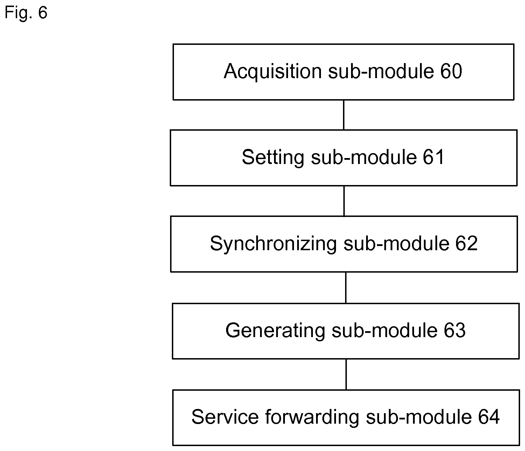

Fig. 6 is a diagram showing the composition structure of a system for realizing hot backup in a centralized network node, as shown in Fig.6, the system for realizing hot backup in a centralized network node is a hot backup system realized in the structure shown in Fig. 1, specifically, the network node shown in Fig. 1 includes a main control module and a standby control module, wherein the main control module includes an acquisition sub-module 60, a setting sub-module 61, a synchronizing sub-module 62, a generating sub-module 63 and a service forwarding sub-module 64, wherein
the acquisition sub-module 60 is configured to acquire control information of the main LSP and that of the standby LSP;
the setting sub-module 61 is configured to set identification information of the control information of the main LSP and that of the standby LSP as Active or Inactive according to current statuses of the main and standby LSPs;
the synchronizing sub-module 62 is configured to synchronize the control information of the main LSP and that of the standby LSP to the standby control module;
the generating sub-module 63 is configured to generate forwarding information according to control information of an LSP whose identification information is Active after switching is performed between the main and standby control modules; and
the service forwarding sub-module 64 is configured to forward a service according to the forwarding information.

When the RSVP-TE tunnel is established, the acquisition sub-module 60 further sends and receives an RSVP-TE signaling to interact with other network nodes in the TE tunnel, i.e., performing information interaction, such as, signaling interaction, and acquires the control information of the main LSP and that of the standby LSP; or
when the main or standby LSP in the RSVP-TE tunnel is updated, the acquisition sub-module 60 further acquires the control information of the main LSP and that of the standby LSP by sending an LSP detection data packet; or
the acquisition sub-module 60 further acquires the control information of the main LSP and that of the standby LSP through configuration information of the main and standby LSPs.

The control information includes identification information of the RSVP-TE tunnel, identification information of an LSP contained in the RSVP-TE tunnel, identification information of a network node contained in the LSP, and information of a forwarding port; and
the forwarding information is routing forwarding information generated according to the control information.

The setting sub-module 61 further sets the identification information of the control information of the main LSP as Active and the identification information of the control information of the standby LSP as Inactive, when both of the main and standby LSPs are available;
the setting sub-module 61 further sets the identification information of the control information of both the main and standby LSPs as Inactive, when neither of the main and standby LSPs is available; and
the setting sub-module 61 further sets the identification information of the control information of a current available LSP as Active and that of a current unavailable LSP as Inactive, when one of the main and standby LSPs is available.

As shown in Fig. 6, the network node further includes a storing module and a searching module (not shown), wherein
the storing module is configured to store information of a corresponding relationship between the control information of the LSP whose identification information is Active and the identifiers of the available LSP and its RSVP-TE tunnel; and
the searching module is configured to search for the control information of the LSP whose identification information is Active according to the identifier of the available LSP or that of the RSVP-TE tunnel and the corresponding relationship.

The above are only the preferred embodiments of the disclosure and not intended to limit the scope of protection of the disclosure.

## Claims

1. A method for realizing hot backup in a centralized network node, in which a main control module and a standby control module are arranged, comprising: establishing a Resource Reservation Protocol-Traffic Engineering (RSVP-TE) tunnel, which contains two Label Switched Paths (LSPs): a main LSP and a standby LSP, for services, and further comprising:
acquiring, by the main control module, control information of the main LSP and that of the standby LSP, setting identification information of the control information of the main LSP and that of the standby LSP as Active or Inactive according to current statuses of the main and standby LSPs, and synchronizing the control information of the main LSP and that of the standby LSP to the standby control module; and
after switching is performed between the main and standby control modules, generating, by a current main control module, forwarding information according to control information of an LSP whose identification information is Active, and forwarding, by the current main control module, a service.

2. The method according to claim 1, wherein the acquiring, by the main control module, control information of the main LSP and that of the standby LSP comprises:
interacting, by the current main control module, information with other network nodes in the TE tunnel by sending and receiving an RSVP-TE signalling, and acquiring, by the current main control module, the control information of the main LSP and that of the standby LSP, when the RSVP-TE tunnel is established; or
acquiring, by the current main control module, the control information of the main LSP and that of the standby LSP by sending an LSP route detection data packet, when the main or standby LSP in the RSVP-TE tunnel is updated; or
acquiring, by the current main control module, the control information of the main LSP and that of the standby LSP through configuration information of the main and standby LSPs.

3. The method according to claim 1, wherein the control information comprises identification information of the RSVP-TE tunnel, identification information of an LSP contained in the RSVP-TE tunnel, identification information of a network node contained in the LSP, and information of a forwarding port; and
the forwarding information is routing forwarding information generated according to the control information.

4. The method according to claim 1, wherein the setting identification information of the control information of the main LSP and that of the standby LSP as Active or Inactive according to current statuses of the main and standby LSPs comprises:
setting the identification information of the control information of the main LSP as Active and the identification information of the control information of the standby LSP as Inactive when both of the main and standby LSPs are available;
setting the identification information of the control information of both the main and standby LSPs as Inactive when neither of the main and standby LSPs is available; and
setting the identification information of the control information of a current available LSP as Active and that of a current unavailable LSP as Inactive, when one of the main and standby LSPs is available.

5. The method according to any one of claims 1 to 4, further comprising:
storing, by the network node, information of a corresponding relationship between the control information of the LSP whose identification information is Active and identifiers of the available LSP and its RSVP-TE tunnel; and
searching for, by the current main control module, the control information of the LSP whose identification information is Active according to the identifier of the available LSP or that of the RSVP-TE tunnel and the corresponding relationship.

6. A system for realizing hot backup in a centralized network node, comprising: a network node, in which a main control module and a standby control module are arranged and a Resource Reservation Protocol-Traffic Engineering (RSVP-TE) tunnel, which contains two Label Switched Paths (LSPs): a main LSP and a standby LSP, is established for services; wherein the main control module further comprises:
an acquisition sub-module(60), which is configured to acquire control information of the main LSP and that of the standby LSP;
a setting sub-module(61), which is configured to set identification information of the control information of the main LSP and that of the standby LSP as Active or Inactive according to current statuses of the main and standby LSPs;
a synchronizing sub-module(62), which is configured to synchronize the control information of the main LSP and the control information of the standby LSP to the standby control module;
a generating sub-module(63), which is configured to generate forwarding information according to control information of an LSP whose identification information is Active after switching is performed between the main and standby control modules; and
a service forwarding sub-module(64), which is configured to forward a service according to the forwarding information.

7. The system according to claim 6, wherein the acquisition sub-module further interacts information with other network nodes in the TE tunnel by sending and receiving an RSVP-TE signaling and acquires the control information of the main LSP and that of the standby LSP when the RSVP-TE tunnel is established; or
the acquisition sub-module further acquires the control information of the main LSP and that of the standby LSP by sending an LSP detection data packet, when the main or standby LSP in the RSVP-TE tunnel is updated; or
the acquisition sub-module further acquires the control information of the main LSP and that of the standby LSP through configuration information of the main and standby LSPs.

8. The system according to claim 6, wherein the control information comprises identification information of the RSVP-TE tunnel, identification information of an LSP contained in the RSVP-TE tunnel, identification information of a network node contained in the LSP, and information of a forwarding port; and
the forwarding information is routing forwarding information generated according to the control information.

9. The system according to claim 6, wherein the setting sub-module further sets the identification information of the control information of the main LSP as Active and the identification information of the control information of the standby LSP as Inactive, when both of the main and standby LSPs are available;
the setting sub-module further sets the identification information of the control information of both the main and standby LSPs as Inactive, when neither of the main and standby LSPs is available; and
the setting sub-module further sets the identification information of the control information of a current available LSP as Active and that of a current unavailable LSP as Inactive, when one of the main and standby LSPs is available.

10. The system according to any one of claims 6 to 9, wherein the network node further comprises:
a storing module, which is configured to store information of a corresponding relationship between the control information of the LSP whose identification information is Active and identifiers of the available LSP and its RSVP-TE tunnel; and
a searching module, which is configured to search for the control information of the LSP whose identification information is Active according to the identifier of the available LSP or that of the RSVP-TE tunnel and the corresponding relationship.

## Patentansprüche

1. Verfahren zum Durchführen eines Hot Backup an einem zentralisierten Netzwerkknoten, an dem ein Hauptsteuermodul und ein Standbysteuermodul angeordnet sind, Folgendes umfassend: Einrichten eines RSVP-TE-Tunnels (Resource Reservation Protocol-Traffic Engineering), der zwei Label Switched Paths (LSPs) enthält, einen Haupt-LSP und einen Standby-LSP, für Dienste und ferner Folgendes umfassend:
Erfassen durch das Hauptsteuermodul von Steuerinformationen des Haupt-LSP und jenen des Standby-LSP, Einstellen von Identifikationsinformationen der Steuerinformationen des Haupt-LSP und jener des Standby-LSP auf "Aktiv" oder "Inaktiv" gemäß dem aktuellen Status des Haupt- und des Standby-LSP und Synchronisieren der Steuerinformationen des Haupt-LSP und jener des Standby-LSP mit dem Standbysteuermodul und
nachdem das Umschalten zwischen dem Haupt- und dem Standbysteuermodul durchgeführt wurde, Erzeugen durch ein aktuelles Hauptsteuermodul von Weiterleitungsinformationen gemäß Steuerinformationen eines LSP, dessen Identifikationsinformation "Aktiv" ist, und Weiterleiten durch das aktuelle Hauptsteuermodul eines Dienstes.

2. Verfahren nach Anspruch 1, wobei das Erfassen durch das Hauptsteuermodul von Steuerinformationen des Haupt-LSP und jenen des Standby-LSP Folgendes umfasst:
Interagieren durch das aktuelle Hauptsteuermodul von Informationen mit anderen Netzwerkknoten im TE-Tunnel durch Senden und Empfangen einer RSVP-TE-Signalisierung, und Erfassen durch das aktuelle Hauptsteuermodul der Steuerinformationen des Haupt-LSP und jener des Standby-LSP, wenn der RSVP-TE-Tunnel eingerichtet wird; oder
Erfassen durch das aktuelle Hauptsteuermodul der Steuerinformationen des Haupt-LSP und jener des Standby-LSP durch Senden eines LSP-Routendetektionsdatenpakets, wenn der Haupt- oder der Standby-LSP im RSVP-TE-Tunnel aktualisiert wird; oder
Erfassen durch das aktuelle Hauptsteuermodul der Steuerinformationen des Haupt-LSP und jener des Standby-LSP durch Auslegungsinformationen des Haupt- und des Standby-LSP.

3. Verfahren nach Anspruch 1, wobei die Steuerinformationen Identifikationsinformationen des RSVP-TE-Tunnels, Identifikationsinformationen eines im RSVP-TE-Tunnel enthaltenen LSP, Identifikationsinformationen eines im LSP enthaltenen Netzwerkknotens und Informationen eines Weiterleitungsanschlusses enthalten und
die Weiterleitungsinformationen Routingweiterleitungsinformationen sind, die gemäß den Steuerinformationen erzeugt werden.

4. Verfahren nach Anspruch 1, wobei das Einstellen der Identifikationsinformationen der Steuerinformationen des Haupt-LSP und jener des Standby-LSP auf "Aktiv" oder "Inaktiv" gemäß dem aktuellen Status des Haupt- und des Standby-LSP Folgendes umfasst:
Einstellen der Identifikationsinformationen der Steuerinformationen des Haupt-LSP auf "Aktiv" und der Identifikationsinformationen der Steuerinformationen des Standby-LSP auf "Inaktiv", wenn sowohl der Haupt- als auch der Standby-LSP verfügbar sind;
Einstellen der Identifikationsinformationen der Steuerinformationen sowohl des Haupt- als auch des Standby-LSP auf "Inaktiv", wenn weder der Haupt- noch der Standby-LSP verfügbar ist; und
Einstellen der Identifikationsinformationen der Steuerinformationen eines aktuellen verfügbaren LSP auf "Aktiv" und jener eines aktuellen nicht verfügbaren LSP auf "Inaktiv", wenn einer des Haupt- und des Standby-LSP verfügbar ist.

5. Verfahren nach einem der Ansprüche 1 bis 4, das ferner Folgendes beinhaltet:
Speichern durch den Netzwerkknoten von Informationen einer entsprechenden Beziehung zwischen den Steuerinformationen des LSP, dessen Identifikationsinformation "Aktiv" ist, und Kennungen des verfügbaren LSP und dessen RSVP-TE-Tunnel und
Suchen durch das aktuelle Hauptsteuermodul nach den Steuerinformationen des LSP, dessen Identifikationsinformation gemäß der Kennung des verfügbaren LSP oder der des RSVP-TE-Tunnels und der entsprechenden Beziehung "Aktiv" ist.

6. System zum Durchführen eines Hot Backup an einem zentralisierten Netzwerkknoten, das Folgendes umfasst: einen Netzwerkknoten, an dem ein Hauptsteuermodul und ein Standbysteuermodul angeordnet sind, und ein RSVP-TE-Tunnel (Resource Reservation Protocol-Traffic Engineering), der zwei Label Switched Paths (LSPs) enthält: einen Haupt-LSP und einen Standby-LSP, für Dienste eingerichtet ist; wobei das Hauptsteuermodul ferner Folgendes umfasst:
ein Erfassungsuntermodul (60), das dazu ausgelegt ist, Steuerinformationen des Haupt-LSP und die des Standby-LSP zu erfassen;
ein Einstellungsuntermodul (61), das dazu ausgelegt ist, Identifikationsinformationen der Steuerinformationen des Haupt-LSP und die des Standby-LSP gemäß dem aktuellen Status des Haupt- und des Standby-LSP auf "Aktiv" oder "Inaktiv" einzustellen;
ein Synchronisierungsuntermodul (62), das dazu ausgelegt ist, die Steuerinformationen des Haupt-LSP und die Steuerinformationen des Standby-LSP mit dem Standbysteuermodul zu synchronisieren;
ein Erzeugungsuntermodul (63), das dazu ausgelegt ist, gemäß Steuerinformationen eines LSP, dessen Identifikationsinformation "Aktiv" ist, Weiterleitungsinformationen zu erzeugen, nachdem das Umschalten zwischen dem Haupt- und dem Standbysteuermodul durchgeführt wurde; und
ein Dienstweiterleitungsuntermodul (64), das dazu ausgelegt ist, einen Dienst gemäß den Weiterleitungsinformationen weiterzuleiten.

7. System nach Anspruch 6, wobei das Erfassungsuntermodul ferner durch Senden und Empfangen einer RSVP-TE-Signalisierung Informationen mit anderen Netzwerkknoten im TE-Tunnel interagiert und die Steuerinformationen des Haupt-LSP und die des Standby-LSP erfasst, wenn der RSVP-TE-Tunnel eingerichtet wird; oder
das Erfassungsuntermodul ferner durch Senden eines LSP-Detektionsdatenpakets die Steuerinformationen des Haupt-LSP und die des Standby-LSP erfasst, wenn der Haupt- oder der Standby-LSP im RSVP-TE-Tunnel aktualisiert wird; oder
das Erfassungsuntermodul ferner die Steuerinformationen des Haupt-LSP und die des Standby-LSP durch Auslegungsinformationen des Haupt- und des Standby-LSP erfasst.

8. System nach Anspruch 6, wobei die Steuerinformationen Identifikationsinformationen des RSVP-TE-Tunnels, Identifikationsinformationen eines im RSVP-TE-Tunnel enthaltenen LSP, Identifikationsinformationen eines im LSP enthaltenen Netzwerkknotens und Informationen eines Weiterleitungsanschlusses enthalten und
die Weiterleitungsinformationen Routingweiterleitungsinformationen sind, die gemäß den Steuerinformationen erzeugt werden.

9. System nach Anspruch 6, wobei das Einstellungsuntermodul ferner die Identifikationsinformationen der Steuerinformationen des Haupt-LSP auf "Aktiv" und die Identifikationsinformationen der Steuerinformationen des Standby-LSP auf "Inaktiv" einstellt, wenn sowohl der Haupt- als auch der Standby-LSP verfügbar sind;
das Einstellungsuntermodul ferner die Identifikationsinformationen der Steuerinformationen sowohl des Haupt- als auch des Standby-LSP auf "Inaktiv" einstellt, wenn weder der Haupt- noch der Standby-LSP verfügbar ist; und
das Einstellungsuntermodul ferner die Identifikationsinformationen der Steuerinformationen eines aktuellen verfügbaren LSP auf "Aktiv" und die eines aktuellen nicht verfügbaren LSP auf "Inaktiv" einstellt, wenn einer des Haupt- und des Standby-LSP verfügbar ist.

10. System nach einem der Ansprüche 6 bis 9, wobei der Netzwerkknoten ferner Folgendes umfasst:
ein Speichermodul, das dazu ausgelegt ist, Informationen einer entsprechenden Beziehung zwischen den Steuerinformationen des LSP, dessen Identifikationsinformation "Aktiv" ist, und Kennungen des verfügbaren LSP und dessen RSVP-TE-Tunnel zu speichern; und
ein Suchmodul, das dazu ausgelegt ist, nach den Steuerinformationen des LSP zu suchen, dessen Identifikationsinformation gemäß der Kennung des verfügbaren LSP oder der des RSVP-TE-Tunnels und der entsprechenden Beziehung "Aktiv" ist.

## Revendications

1. Procédé pour réaliser une sauvegarde à chaud dans un noeud de réseau centralisé, dans lequel un module de commande principal et un module de commande de secours sont agencés, comprenant :
l'établissement d'un tunnel à protocole de réservation de ressources-prévision des moyens d'écoulement du trafic RSVP-TE, qui contient deux chemins à commutation d'étiquettes LSPs : un LSP principal et un LSP de secours, pour des services, et comprenant en outre :
l'acquisition, par le module de commande principal, d'informations de commande du LSP principal et de celles du LSP de secours, le réglage d'informations d'identification des informations de commande du LSP principal et de celles du LSP de secours comme étant actives ou inactives selon des états actuels des LSPs principal et de secours, et la synchronisation des informations de commande du LSP principal et de celles du LSP de secours au module de commande de secours ; et
après qu'une commutation est réalisée entre les modules de commande principal et de secours, la génération, par un module de commande principal actuel, d'informations d'acheminement selon des informations de commande d'un LSP dont les informations d'identification sont actives, et l'acheminement, par le module de commande principal actuel, d'un service.

2. Procédé selon la revendication 1, dans lequel l'acquisition, par le module de commande principal, d'informations de commande du LSP principal et de celles du LSP de secours comprend :
l'interaction, par le module de commande principal actuel, d'informations avec d'autres noeuds de réseau dans le tunnel TE en envoyant et recevant une signalisation RSVP-TE, et l'acquisition, par le module de commande principal actuel, des informations de commande du LSP principal et de celles du LSP de secours, lorsque le tunnel RSVP-TE est établi ; ou
l'acquisition, par le module de commande principal actuel, des informations de commande du LSP principal et de celles du LSP de secours en envoyant un paquet de données de détection de route de LSP, lorsque le LSP principal ou de secours dans le tunnel RSVP-TE est actualisé ; ou
l'acquisition, par le module de commande principal actuel, des informations de commande du LSP principal et de celles du LSP de secours par l'intermédiaire d'informations de configuration des LSPs principal et de secours.

3. Procédé selon la revendication 1, dans lequel les informations de commande comprennent des informations d'identification du tunnel RSVP-TE, des informations d'identification d'un LSP contenu dans le tunnel RSVP-TE, des informations d'identification d'un noeud de réseau contenu dans le LSP, et des informations d'un port d'acheminement ; et
les informations d'acheminement sont des informations d'acheminement de routage générées selon les informations de commande.

4. Procédé selon la revendication 1, dans lequel le réglage d'informations d'identification des informations de commande du LSP principal et de celles du LSP de secours comme étant actives ou inactives selon des états actuels des LSPs principal et de secours comprend :
le réglage des informations d'identification des informations de commande du LSP principal comme étant actives et des informations d'identification des informations de commande du LSP de secours comme étant inactives lorsque les deux des LSPs principal et de secours sont disponibles ;
le réglage des informations d'identification des informations de commande des deux LSPs principal et de secours comme étant inactives lorsque ni l'un ni l'autre des LSPs principal et de secours n'est disponible ; et
le réglage des informations d'identification des informations de commande d'un LSP actuellement disponible comme étant actives et de celles d'un LSP actuellement indisponible comme étant inactives, lorsqu'un des LSPs principal et de secours est disponible.

5. Procédé selon l'une quelconque des revendications 1 à 4, comprenant en outre :
le stockage, par le noeud de réseau, d'informations d'une relation correspondante entre les informations de commande du LSP, dont les informations d'identification sont actives, et des identifiants du LSP disponible et de son tunnel RSVP-TE ; et
la recherche, par le module de commande principal actuel, des informations de commande du LSP, dont les informations d'identification sont actives, selon l'identifiant du LSP disponible ou celui du tunnel RSVP-TE et la relation correspondante.

6. Système pour réaliser une sauvegarde à chaud dans un noeud de réseau centralisé, comprenant : un noeud de réseau, dans lequel un module de commande principal et un module de commande de secours sont agencés et un tunnel à protocole de réservation de ressources-prévision des moyens d'écoulement du trafic RSVP-TE, qui contient deux chemins à commutation d'étiquettes LSPs : un LSP principal et un LSP de secours, est établi pour des services ; dans lequel le module de commande principal comprend en outre :
un sous-module d'acquisition (60), qui est configuré pour acquérir des informations de commande du LSP principal et celles du LSP de secours ;
un sous-module de réglage (61), qui est configuré pour régler des informations d'identification des informations de commande du LSP principal et de celles du LSP de secours comme étant actives ou inactives selon des états actuels des LSPs principal et de secours ;
un sous-module de synchronisation (62), qui est configuré pour synchroniser les informations de commande du LSP principal et les informations de commande du LSP de secours au module de commande de secours ;
un sous-module de génération (63), qui est configuré pour générer des informations d'acheminement selon des informations de commande d'un LSP dont les informations d'identification sont actives après qu'une commutation est réalisée entre les modules de commande principal et de secours ; et
un sous-module d'acheminement de service (64), qui est configuré pour acheminer un service selon les informations d'acheminement.

7. Système selon la revendication 6, dans lequel le sous-module d'acquisition en outre effectue une interaction d'informations avec d'autres noeuds de réseau dans le tunnel TE en envoyant et recevant une signalisation RSVP-TE et acquiert les informations de commande du LSP principal et celles du LSP de secours lorsque le tunnel RSVP-TE est établi ; ou
le sous-module d'acquisition acquiert en outre les informations de commande du LSP principal et celles du LSP de secours en envoyant un paquet de données de détection de LSP, lorsque le LSP principal ou de secours dans le tunnel RSVP-TE est actualisé ; ou
le sous-module d'acquisition acquiert en outre les informations de commande du LSP principal et celles du LSP de secours par l'intermédiaire d'informations de configuration des LSPs principal et de secours.

8. Système selon la revendication 6, dans lequel les informations de commande comprennent des informations d'identification du tunnel RSVP-TE, des informations d'identification d'un LSP contenu dans le tunnel RSVP-TE, des informations d'identification d'un noeud de réseau contenu dans le LSP, et des informations d'un port d'acheminement ; et
les informations d'acheminement sont des informations d'acheminement de routage générées selon les informations de commande.

9. Système selon la revendication 6, dans lequel le sous-module de réglage en outre règle les informations d'identification des informations de commande du LSP principal comme étant actives et les informations d'identification des informations de commande du LSP de secours comme étant inactives, lorsque les deux des LSPs principal et de secours sont disponibles ;
le sous-module de réglage en outre règle les informations d'identification des informations de commande des deux LSPs principal et de secours comme étant inactives, lorsque ni l'un ni l'autre des LSPs principal et de secours n'est disponible ; et
le sous-module de réglage en outre règle les informations d'identification des informations de commande d'un LSP actuellement disponible comme étant actives et de celle d'un LSP actuellement indisponible comme étant inactives, lorsqu'un des LSPs principal et de secours est disponible.

10. Système selon l'une quelconque des revendications 6 à 9, dans lequel le noeud de réseau comprend en outre :
un module de stockage, qui est configuré pour stocker des informations d'une relation correspondante entre les informations de commande du LSP, dont les informations d'identification sont actives, et des identifiants du LSP disponible et de son tunnel RSVP-TE ; et
un module de recherche, qui est configuré pour rechercher les informations de commande du LSP, dont les informations d'identification sont actives, selon l'identifiant du LSP disponible ou celui du tunnel RSVP-TE et la relation correspondante.
